# EUROPEAN PATENT APPLICATION

(11) **EP 2 562 674 A1**
(43) Date of publication of application: **27.02.2013**
(21) Application number: 12168875.8
(22) Date of filing: 22.05.2012
(51) Int. Cl.: G06F 21/52

(54) **Terminal and method for providing risk of application using the same**

(30) Priority: 24.08.2011 KR 20110084434
(71) Applicant: Pantech Co., Ltd., Seoul 121-792 (KR)
(72) Inventor: Kim, Seob Gon, 121-792 Seoul (KR); Yoo, Gene, 121-792 Seoul (KR); Jung, Su Kyoung, 121-792 Seoul (KR)
(74) Representative: Herzog, Markus

(57) **Abstract**

A terminal includes an information collection unit to collect execution information of an application; a determination unit to select a first risk determination criterion in association with a first security item, and to determine first risk of the application with respect to the first security item based on the first risk determination criterion and the execution information; and a display unit to display the first risk of the application and the first security item.

## Description

### CROSS-REFERENCE TO RELATED APPLICATION

This application claims priority from and the benefit under 35 U.S.C. § 119(a) of Korean Patent Application No. 10-2011-0084434, filed on August 24, 2011, which is incorporated by reference for all purposes as if fully set forth herein.

### BACKGROUND

FIELD

The present disclosure relates to a terminal and a method for providing risk of an application and, more particularly, to a terminal and a method for providing risk of an application based on determination criteria.

DISCUSSION OF THE BACKGROUND

As smart phones have been popularized among mobile terminal users, mobile terminal users are able to access various applications and utilities through mobile terminals. A smart phone user may install various programs, applications in the mobile terminal. The user may install a program in the smart phone in a recognizable process. For example, a user may purchase an application in a web market such as Android market and install the application.

However, the user may unknowingly install a program by visiting a specific website configured to install an applet or a small program in a smart phone.

If the user installs a program in a smart phone without recognizing a potential security problem of the application, the user may choose to install the application under the risk of the potential security problem or choose to give up using the application.

A new program may introduce security threats, computer virus or malignant code into a smart phone. In addition, some application developers may change operations of their applications through application update to retrieve user information.

Therefore, there is a need for a method for recognizing risk of an application.

### SUMMARY

Exemplary embodiments of the present invention provide a terminal and a method for providing risk of an application according to determination criteria.

Additional features of the invention will be set forth in the description which follows, and in part will be apparent from the description, or may be learned by practice of the invention.

Exemplary embodiments of the present invention provide a terminal including an information collection unit to collect execution information of an application; a determination unit to select a first risk determination criterion in association with a first security item, and to determine first risk of the application with respect to the first security item based on the first risk determination criterion and the execution information; and a display unit to display the first risk of the application and the first security item.

Exemplary embodiments of the present invention provide a method for providing risk of an application, including collecting execution information of the application; selecting a risk determination criterion in association with a security item; determining risk of the application with respect to the security item based on the risk determination criterion and the execution information; and displaying the risk of the application and the security item.

Exemplary embodiments of the present invention provide a non-transitory computer-readable storage medium comprising an executable program, which when executed, operates collecting execution information of the application; selecting a risk determination criterion in association with a security item; determining risk of the application with respect to the security item based on the risk determination criterion and the execution information; and displaying the risk of the application and the security item.

It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A is a block diagram illustrating a mobile terminal to provide risk of an application according to an exemplary embodiment of the present invention.

FIG. 1B is a bock diagram illustrating a mobile terminal to provide risk of an application according to an exemplary embodiment of the present invention.

FIG. 2 is a diagram showing a process for determining risk based on determination criteria according to an exemplary embodiment of the present invention.

FIG. 3 is a block diagram showing multiple security items for determination criteria according to an exemplary embodiment of the present invention.

FIG. 4 is a diagram showing an example of a screen displayed by the processor if the right user-interface (UI) tab of FIG. 3 is selected according to an exemplary embodiment of the present invention.

FIG. 5 is a diagram showing an example of a screen displayed by the processor if a download source UI tab of FIG. 3 is selected according to an exemplary embodiment of the present invention.

FIG. 6 is a diagram showing an example of a screen displayed by the processor if a database (DB) use UI tab of FIG. 3 is selected according to an exemplary embodiment of the present invention.

FIG. 7 is a diagram showing an example of a screen displayed by the processor if a network access count UI tab of FIG. 3 is selected according to an exemplary embodiment of the present invention.

FIG. 8 is a diagram showing an example of a screen displayed by the processor if an execution count UI tab of FIG. 3 is selected according to an exemplary embodiment of the present invention.

FIG. 9 is a diagram showing an example of a screen displayed by the processor if a category UI tab of FIG. 3 is selected according to an exemplary embodiment of the present invention.

FIG. 10 is a diagram showing an example of a screen displayed by the processor if a risk UI tab of FIG. 3 is selected according to an exemplary embodiment of the present invention.

FIG. 11 is a diagram showing an example of a screen displayed by the processor if two or more UI tabs of FIG. 3 are selected according to an exemplary embodiment of the present invention.

FIG. 12 is a flowchart illustrating a method for providing the risk of an application using multiple risk criteria according to an exemplary embodiment of the present invention.

FIG. 13 is a flowchart illustrating a method for determining risk using rights of the application as a determination criterion according to an exemplary embodiment of the present invention.

FIG. 14 is a flowchart illustrating a method for determining risk using the download source of the application as a determination criterion according to an exemplary embodiment of the present invention.

FIG. 15 is a flowchart illustrating a method for determining risk using a usage of database by the application as a determination criterion according to an exemplary embodiment of the present invention.

FIG. 16 is a flowchart illustrating a method for determining risk using the network access count of the application as a determination criterion according to an exemplary embodiment of the present invention.

FIG. 17 is a flowchart illustrating a method for determining risk using category information of the application as a determination criterion according to an exemplary embodiment of the present invention.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X).

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

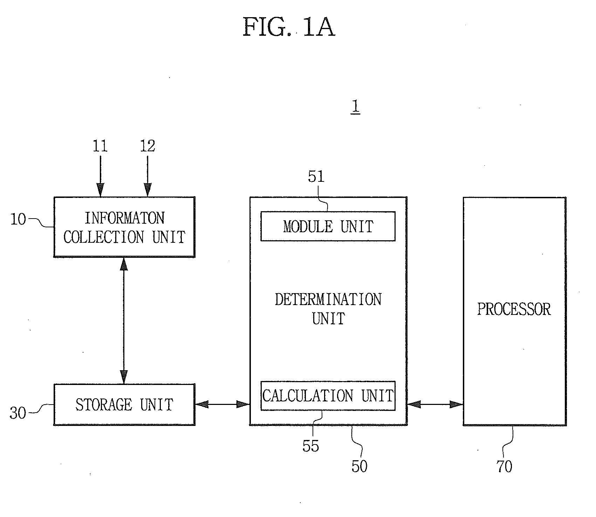

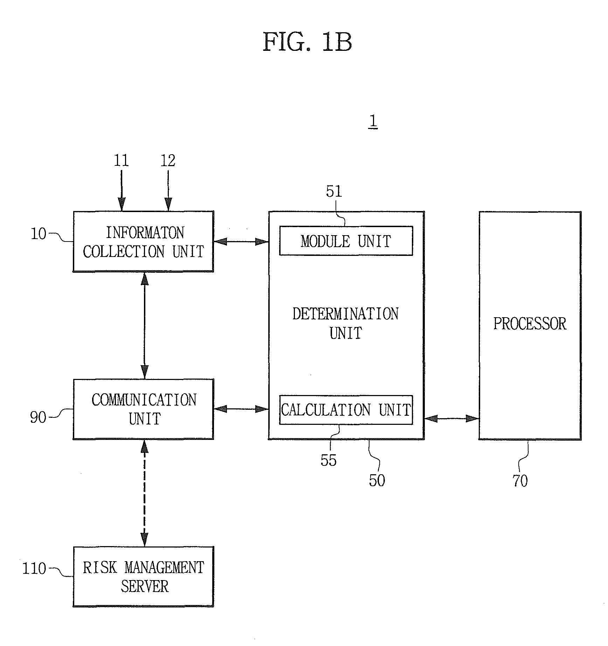

FIG. 1A is a block diagram illustrating a mobile terminal to provide risk of an application according to an exemplary embodiment of the present invention. FIG. 1B is a block diagram illustrating a mobile terminal to provide risk of an application according to another exemplary embodiment of the present invention.

Referring to FIG. 1A, the terminal 1 includes an information collection unit 10, a storage unit 30, a determination unit 50, and a processor 70. The determination unit 50 may include a module unit 51 and a calculation unit 55. Referring to FIG. 1B, the terminal 1 includes an information collection unit 10, a determination unit 50, a processor 70, and a communication unit 90. The terminal 1 may communicate with a risk management server 110 via the communication unit 90. Further, the terminal 1 may include a display unit (not shown).

The information collection unit 10 collects characteristic information 11 and execution information 12 of the application. The collected characteristic information 11 and execution information 12 of the application are provided to the storage unit 30.

The characteristic information 11 of the application is provided if the application is installed in the terminal 1, and includes information such as rights of the application, a download source, a category, etc. Further, the characteristic information 11 may be received from a risk management server 110. The risk management server 110 may communicate with multiple terminals including the terminal 1, and may receive the characteristic information 11 from the multiple terminals.

The execution information 12 of the application is provided if the application is executed in the terminal 1 and includes information such as a usage of a database, network access count, execution count of the terminal 1, etc. A portion of the execution information 12 except private information may be transmitted to the risk management server 110 and/or other terminals. Thus, the risk management server 110 may update risk information about an application by collecting execution information of the multiple terminals.

The storage unit 30 stores the characteristic information 11 of the application and the execution information 12 of the application, collected by the information collection unit 10, and updates the stored information whenever the information is changed. Further, the storage unit 30 may update the characteristic information 11 and the execution information 12 by receiving corresponding information from the risk management server 110. Here, the characteristic information 11 and the execution information 12 are distinguished for clarification. However, the execution information 12 may include the characteristic information 11.

The storage unit 30 may be a memory mounted in the terminal 1 or an SD card, and the like. Further, the storage unit 30 may be a web server, such as the risk management server 110, located outside the terminal 1.

The display unit may display a graphic user interface (GUI) to enable a user to select risk determination criterion and display risk result based on one or more risk determination criterion. The display unit may display characteristic information and execution information of an application in accordance with risk determination criteria.

The determination unit 50 determines the risk of an application installed in the terminal 1 or the risk of the application executed in the terminal 1 using the characteristic information 11 and/or execution information 12 of the application. Hereinafter, the risk may refer to a risk result, risk information, or a risk value represented by a numerical value. The determination unit 50 may retrieve risk determination criteria in the form of a list or table stored in the storage unit 30 or the risk management server 110, compare the characteristic information 11 and the execution information 12 with the risk determination criteria, and determine the risk of the application. Further, the determination unit 50 may store the risk determination criteria in the storage unit 30.

The determination unit 50 may use information about rights of the application (i.e., rights of the application to access a security item), a download destination, a download source, a usage of the database of the terminal, a network access count, an execution count, and a category, etc. as the risk determination criteria. Hereinafter, a right of an application may refer to an authorization for the application to use an item (i.e., a security item), an access authorization to an item, an access right to an item for the application, an access permission to an item for the application, and the like.

The determination unit 50 may determine the risk using only one determination criterion or using two or more determination criteria. The determination criterion may be selected by a user or may be automatically selected by the determination unit 50 or the risk management server 110.

The determination unit 50 may include a module unit 51 for determining the risk according to each determination criterion. The module unit 51 may include a plurality of modules for determining the risk according to the determination criteria. At least one of the plurality of modules may include a counter unit (not shown). The counter unit counts the number of a specific operation of the application with respect to an item such as a security item, and generates count information based on the count number. For example, the counter unit may count the number of executions of the application, the number of network access trials by the application, the number of database access trials by the application, and the like. The count information may be used to determine the risk of the application based on each determination criterion.

The plurality of modules may determine the risk of the application according to different determination criteria. For example, if the module unit 51 includes a module A, a module B, a module C, a module D, a module E and a module F, the module A computes the risk of the application using rights of the application as the determination criterion, the module B computes the risk of the application using a download source of the application as the determination criterion, and the module C computes the risk of the application using a usage of a database of the terminal 1 as the determination criterion.

Further, the module D computes the risk of the application using a network access count of the application as the determination criterion, the module E computes the risk of the application using an execution count of the application as the determination criterion, and the module F computes the risk of the application using category information of the application as the determination criterion.

The mobile terminal 1 may store information about one or more security items. The information about security items may be updated by the authorized user of the terminal 1 or the risk management server 110 and may be stored in a secured portion of the storage unit 30. The security items may include network access, database access, download source access, personal information access, maximum execution number of the application during a determined period, and the like. The network access may include 3G access, voice call access, Wi-Fi access, Short Message Service (SMS)/Multimedia Message Service (MMS) access, GPS access, and the like. If an application is installed or executed in the terminal 1, the information collection unit 10 collects information about each security item for the application. Further, if an application is installed in the terminal 1, the determination unit 50 or the user of the terminal 1 may determine the category of the application based on the characteristic information. Certain security items to be secured during the execution of the installed application may be selected based on the determined category of the application.

The security items may be used to determine the risk determination criteria. During an execution of an application installed in the terminal 1, certain security items may be prohibited to be used by the application if it is determined that risk result based on the corresponding risk determination criterion is higher than a threshold value. For example, if an application A is determined to have a risk value higher than a threshold value based on a usage of database, subsequent database access request by the application A may be denied by the determination unit 50.

Further, the user of the terminal 1 may determine to prohibit a specific security item for an application according to risk results that are obtained based on each risk determination criterion. For example, the user may prohibit SMS messaging operation for an application B, if the user determines that the application B should not use the SMS messaging function. If an application installed in the terminal 1 requests a usage of a security item, the determination unit 50 identifies identification of the application and determines whether the usage of the security item is prohibited for the identified application. Thus, the user may prohibit the identified application from the usage of the security item or may delete the application if the application is determined to be risky.

Hereinafter, the method for determining the risk of the application according to each determination criterion in each module of the module unit 51 will be described in more detail.

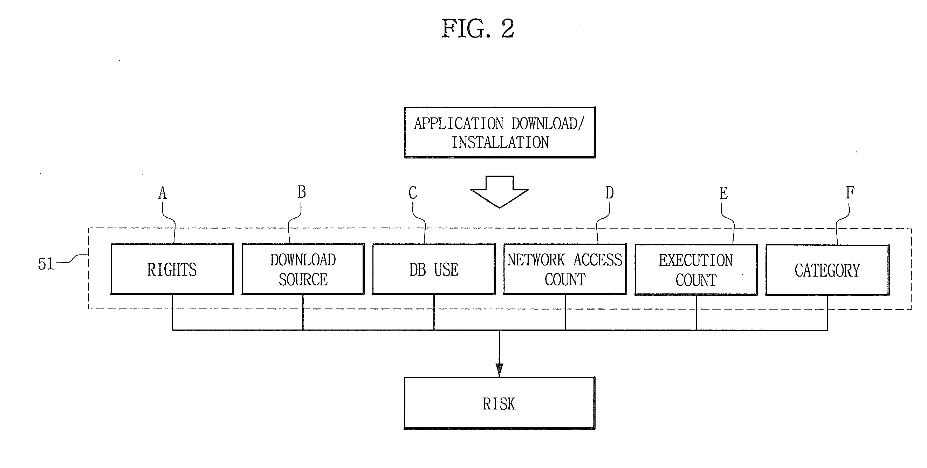

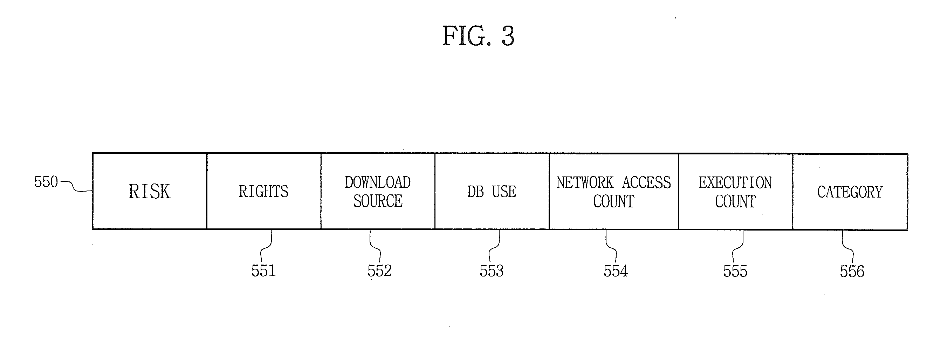

FIG. 2 is a diagram showing a process for determining risk based on multiple determination criteria according to an exemplary embodiment of the present invention. FIG. 3 is a block diagram showing multiple security items for each of the determination criteria according to an exemplary embodiment of the present invention.

The module A extracts information about the rights of the application installed in the terminal 1 and counts the rights when the rights of the application are extracted, in order to determine the risk of the application using the number of rights of the application as a determination criterion. For example, the rights of the application may include an access to a network, an access to a GPS, an access to personal information, an access to SD storage, an access to voice call, an access to account, an access to a short message service (SMS), etc.

The module A counts the rights of each application until all applications installed in the terminal 1 are searched for. Risk of each application may be determined based on the number of rights counted for each application and a table for rights may be stored. Table 1 shows an example of storing the rights of the application in a form of a table. For module A, the security item may include network, GPS, personal information, SD storage, voice call, account, SMS, and the like.

**Table 1**

| Application name | Network | GPS | Personal information | SD storage | Call | account | ... | SMS | Number of rights |
|---|---|---|---|---|---|---|---|---|---|
| Kids piano | 0 | | 0 | | | 0 | | | 3 |
| Famous Paintings | | | | | | | | 0 | 1 |
| Catch and Go | | 0 | | | | 0 | | | 2 |
| Checkbook | | | 0 | | | | | | 1 |
| SaveMoney | | | | | | | | 0 | 1 |
| Xpenser | 0 | | | | | | | | 1 |
| WeatherPro | | | | 0 | | 0 | | | 2 |
| Weather, earthquake | | 0 | | | 0 | | | 0 | 3 |
| Grocety king | | | | 0 | | | | | 1 |
| MobileNavigato r | 0 | | 0 | | | 0 | | | 3 |
| FightTrack | | | 0 | | | | | 0 | 2 |
| Trip Journal | | | | | | 0 | | | 1 |
| Melon | 0 | | | | | | | | 1 |
| Talking Lila the Fairy | | 0 | | | | | | | 1 |
| Kakao talk | | | | 0 | | 0 | | | 2 |
| Skype | | | 0 | | | | 0 | | 2 |
| Gentle alarm | 0 | | | | | | | | 1 |
| ESPN | | | | | | | | 0 | 1 |
| EMS ACLS Guide | 0 | 0 | 0 | 0 | | 0 | | | 5 |

Referring to Table 1, rights extracted from each application and identification of corresponding application may be stored in an application name item and the number of the rights is stored in a "number-of-rights" item.

For example, since "Kakao talk" application has rights to SD storage and rights to account, the number of rights is 2. As the number of rights of the application is increased, the security of the application is decreased. Thus, risk may be increased. The application name item for the "Kakao talk" application may include rights for SD storage and rights for account. The number of rights item for the "Kakao talk" application may have a value "2" as count information.

Although the module A counts the number of rights on a per application basis, applications may be counted on a per right basis. For example, the number of installed applications having rights for GPS may be obtained. If the number of selected rights is two or more, applications having the rights are searched for and counted until all the selected rights are searched for.

The module B determines whether a downloaded application is a file compatible with an operating system of the terminal 1, in order to determine the risk of the application using the download source of the application as the determination criterion. For example, if the operating system of the terminal 1 is android, it is determined whether the application has a format of an application package file (APK file).

If the application is a file compatible with the operating system, the module B stores a source of the application and determines whether the source is a market supported by the operating system of the terminal 1.

If the source of the application is a market supported by the operating system of the terminal 1, it may be determined that risk is low based on information about the source. If the application source is a third party market, since the security of the application is lower than that of the market supported by the operating system, risk may be increased.

If the application source is not the market supported by the operating system of the terminal 1, it is determined whether the application is a third party market registered by the user. If the application is the registered third party market, risk may be determined based on information about the source.

The third party market registered by the user may be stored in a form of a list. Table 2 shows an example of storing registered third party markets in the form of a list. The registered third party markets may be managed by the user and may be deleted, added or changed.

**Table 2**

| |
|---|
| Third party market list |
| http://www.handango.com |
| http://store.handmark.com |
| http://www.getjar.com |
| http://andappstore.com |
| http://www.slideme.org |
| ... |

The module C monitors whether the application accesses the database of the terminal 1, in order to determine the risk of the application using the usage information of the database of the terminal 1 by the application as the determination criterion. As the usage of the database by the application is increased, an information leakage probability is increased and thus risk may be increased.

A list of monitored objects of the database of the terminal 1 may be stored. Table 3 shows an example of storing the list of monitored objects of the database.

**Table 3**

| |
|---|
| List of monitored objects |
| Call log |
| SMS/MMS |
| Web log |
| E-mail |
| Contacts |
| Gallery |

Referring to Table 3, the monitored objects may include a call log of the terminal 1, a short messaging service (SMS), a multimedia messaging service (MMS), a web log, an e-mail, contacts, and gallery.

In order to monitor whether the application accesses the database of the terminal 1, a query command is detected when the application calls an application programming interface (API) of a framework.

Types of the query command may include cursor query, insert, delete and update. It may be determined that the risk of the cursor query which is an operation for reading information of the database (DB) is lower than that of a writing operation such as insert, delete or update. A general cursor query command is as follows.

ContentResolver.query (Uri uri, String[] projection, String selection, String[] selectionArgs, String sortOrder)

A routine for delivering a uniform resource identifier (URI) to the module C may be added to the query function of ContentResolver such that information may be exchanged between the framework and the module C.

The command of a delete operation which is one of the writing operations is as follows.

ContentResolver.delete(Uri url, String where, String[] selectionArgs)

Even in the writing operation, similar to the query function of ContentResolver, a routine for delivering a URI to the module C may be added such that information may be exchanged between the framework and the module C.

The module C compares the received URI and the type of the query command with monitoring objects stored in the terminal 1 and determines whether the URI and the type of the query command are one of the monitoring objects. If the URI and the query type are one of the monitored objects, the risk is determined based on the application which calls the API and the query command.

The module D monitors a network access request of the application in order to determine the risk of the application using the network access count of the application as the determination criterion. As the network access count of the application is increased, an information leakage probability is increased and thus risk may be increased. For example, the network may include 3G, WiFi, Voice, Message, etc.

The module D may store a table ("network access table") for count information according to an execution request of the application. Further, the table may include network access request information such as network type, access request time, operation information during the network access, and the like. If the network access request of the application is generated, the information about the application is extracted and the extracted information is compared with information stored in the network access table.

If the application information is stored in the network access table, the count of the network access requests is increased by one. If the application information is not stored in the table, an application list and count are added to the network access table. Risk is determined based on information about the count of the network access requests of the application.

The module E monitors execution of the application in order to determine the risk of the application using the execution count of the application as the determination criterion. If the execution count of the application is increased, an information leakage probability is increased and thus risk may be increased.

The module E may store a table ("application execution table") for information about the execution count of the application. If the application is executed, information about the application is extracted and the extracted information is compared with information stored in the application execution table.

If execution information of the application is stored in the application execution table, the execution count of the application is increased. If execution information of the application is not stored in the application execution table, an application list and information about execution count are added to the application execution table as the execution information of the application. The module E determines risk based on information about the execution count of the application.

The module F classifies the applications installed in the terminal 1 according to categories in order to determine the risk of the application using the category of the application as the determination criterion. For example, the applications may be classified into education, finance, weather, shopping, travel, entertainment, communication, business, tool, shopping, medical treatment, etc.

Allowed rights ("allowed items") for each application may be changed according to categories of each application. If rights which are not related to the category are allowed, the risk of the application may be increased. Table 4 shows an example of storing allowed rights according to the categories of the applications in a form of a table.

**Table 4**

| Application category/rights | Network | GPS | Personal information | Account | SD storage | Call | SMS | ... | Others |
|---|---|---|---|---|---|---|---|---|---|
| Education | 0 | | | | 0 | | | | |
| Finance | 0 | | | 0 | 0 | | | | |
| Weather | 0 | 0 | | | | | | | |
| Shopping | 0 | | | 0 | | 0 | | | |
| Travel | 0 | 0 | 0 | | 0 | | | | 0 |
| Entertainment | | | 0 | 0 | | 0 | | | |
| Communication | 0 | | 0 | | | | | | |
| Business | | | 0 | | | | | | 0 |
| Tool | | | | | 0 | | | | 0 |
| Medical | 0 | | 0 | 0 | | | | | |
| treatment | | | | | | | | | |

Referring to Table 4 ("category table"), if the application is related to weather, the application has rights to the network access and the GPS access, but does not have rights to access personal information, account, etc. That is, allowed items for weather category are network access and GPS access. Other items, such as personal information access, account access, SD storage access, voice call access, SMS access, are security items for the weather category. If the application is related to communication, the application has allowed rights to network and personal information, but does not have rights to GPS, call, SMS, etc. That is, allowed items for communication category may include network access and personal information access. Other items, such as GPS access, account access, SD storage access, voice call access, SMS access, are security items for the communication category. For each category, pertinent items are authorized to access as an allowed item among the security items based on the characteristics of each category. Thus, a portion of security items are classified as allowed items based on the category of an application. For example, weather-related applications may not access personal information, SD storage, SMS, and the like, thus those items remain as security items. However, weather-related application may access GPS information to provide location-based weather information in real-time, thus GPS access may be classified as an allowed item. Information about allowed items for each category may be updated by the determination unit 50 or the risk management server 110. The allowed rights of each category shown in Table 4 are only exemplary and may be changed according to a service change or user setting.

The module F compares rights of an application with information about rights for corresponding category in the category table and determines whether the rights of the application match the rights of the category. The module F determines the risk based on whether the rights of the application match the rights of the category of the application. If the application has more rights than rights for corresponding category in the category table, risk of the application may be increased.

As described above, the determination unit 50 may provide the risk information of the application provided by each module. Further, aggregated risk of the application provided by two or more modules may be provided. Total risk of the application may be weighted average of risk results provided by each module as described below.

The determination unit 50 may further include a calculation unit 55 for summing the risk provided by two or more modules so as to calculate the aggregated risk of the application.

The calculation unit 55 may apply weights to each risk result provided by the two or more modules so as to calculate the aggregated risk of the application. For example, if the user selects two or more modules, the calculation unit 55 may receive risk results from the selected modules and apply weights to the modules.

Table 5 shows an example of a table for the weights of the modules. Tables 6 to 8 show examples of tables describing sub-weights of the modules.

**Table 5**

| Module | Weight of risk of each module | Determination criterion in weight | |
|---|---|---|---|
| A | 0.25 | Number of rights of application | |
| B | 0.15 | Download source of application (see Table 6) | |
| C | 0.25 | | Usage of DB of termi nal (see Table 7) |
| D | 0.15 | Network access count of application | |
| E | 0.1 | Execution count of application | |
| F | 0.1 | Category of application (see Table 8) | |

Referring to Table 5, the weight is set to each module and the weight may be changed according to contribution to risk. The weight may be set or changed by the user. Statistical data may be accumulated and be used to determine the weight of each module. The risk management server 110 may collect data from multiple terminals and determine the weight of each module based on the collected statistical data.

The module B measures the risk using the download source of the application as the determination criterion. At this time, the weight ("sub-weight") may be differently set according to download sources. Download sources may be classified into multiple groups based on reliability information of the source, developer information of the source, or changes of rights during application update. Risk levels for each group may be set differently. Table 6 shows an example of a table ("download source table") for the weights corresponding to download sources.

**Table 6**

| Risk item (download source) | | Risk weight ("sub-weight") |
|---|---|---|
| Android market | | 0 |
| Third party market with high reliability | | 1 |
| Third party market with low reliability | | 2 |
| Download directly from web (no market information) | | 3 |
| No Developer information | | 2 |
| | Right change during update | 4 |

Referring to Table 6, if the download source is a market supported by the operating system of the terminal 1, for example, an android market, the weight may be set to 0 and, if the download source is a third party market with high reliability, the weight may be set to 1. If the application is directly downloaded from the web, that is, if the application is directly downloaded through a mail or message not through the market, the weight is set to 3, and, if authorization of rights is changed during update of the application, the weight is set to 4.

The module C measures the risk using the usage of the database of the terminal 1 as the determination criterion. Table 7 shows an example of a table for weights corresponding to usage of the database.

**Table 7**

| Risk item | Risk weight |
|---|---|
| Each item count | 1 |
| DB reading operation command | Number * 1 |
| DB writing operation command | Number *2 |
| Whenever the count of a specific item exceeds 10 | 3 |

Referring to Table 7, the weight of the writing operation command is higher than that of the reading operation command. A limit value may be set to the count of a specific item and the weight may be increased whenever the count exceeds the limit value.

The module F measures the risk using the category of the application as the determination criterion. Table 8 ("category matching table") shows an example of a table for weights when the rights of the application mismatch the rights of the category.

**Table 8**

| Risk item | Risk weight |
|---|---|
| Less than or equal to right mismatch reference value | 1 |
| Greater than right mismatch reference value | 5 |

Referring to Table 8, a right mismatch reference value is set and the weight may be differently applied depending on whether the number of rights of an application that are not authorized rights for the corresponding category is greater than the right mismatch reference value. For example, if the number of items, the number of rights that are not authorized for the corresponding category, is greater than or equal to 1 and less than 3, the weight is set to 1. If the number of items is greater than or equal to 3, the weight is set to 5. Further, the risk weight may be determined to be proportion to the number of items ("the number of mismatches").

The determination unit 50 provides the risk result provided by one module of the module unit 51 or the total risk result provided by the calculation unit 55.

The processor 70 displays the risk result or total risk result of the application provided by the determination unit 50 according to the determination criterion such that the user may recognize the risk result or total risk result with each determination criterion using an user interface (UI) including an icon.

Referring to FIG. 3, the processor 70 provides a menu item ("menu") according to the determination criterion and each menu shows the risk result provided by each module in the determination unit 50. For example, the processor 70 provides a screen for selecting the determination criterion of the determination unit 50 and a screen for selecting a sub menu of the determination criterion.

For example, the processor 70 may include a right UI tab 551 for displaying the risk result of the application using the rights of the application as the determination criterion in the module A, a download source UI tab 552 for displaying the risk of the application using the download source of the application as the determination criterion in the module B, and a DB use UI tab 553 for displaying the risk of the application using the usage of the database of the terminal 1 as the determination criterion in the module C.

Further, the processor 70 may include a network access count UI 554 tab for displaying the risk of the application using the network access count of the application as the determination criterion in the module D, an execution count UI tab 555 for displaying the risk of the application using the execution count of the application as the determination criterion in the module E, and a category UI tab 556 for displaying the risk of the application using the category of the application as the determination criterion in the module F.

In addition, the processor 70 may include a risk UI tab 550 for displaying the total risk result of the application provided by the determination unit 50. The total risk result of the application may be a value obtained by aggregating the risk determined by two or more modules of the module unit 51 or by aggregating the risk determined by all the modules of the module unit 51. The selection of the determination criterion may depend on the selection of the UIs 551, 552, 553, 554, 555 and 556 of the user.

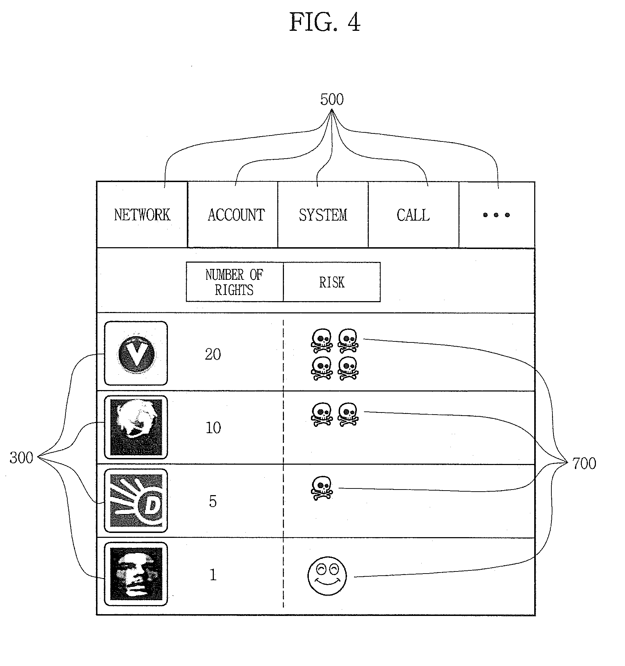

FIG. 4 is a diagram showing an example of a screen displayed by the processor if the right UI tab of FIG. 3 is selected according to an exemplary embodiment of the present invention.

Referring to FIG. 4, if a user selects the right UI tab 551, the processor 70 displays the number of rights and risk of each application. Each application may be displayed in the form of an icon 300 for enabling the user to recognize each application.

The processor 70 may arrange the applications in descending order of risk and provide the risk using an icon 700 for displaying the risk so as to enable the user to recognize the risk visually. However, the present invention is not limited thereto. The icon 300 and 700 may be replaced by characters, numbers, graphs, and the like.

The right UI tab 551 may include sub menu tabs such as a network, an account, a system, a call, etc. If the user selects the sub menu tabs 500, applications having authorization for corresponding right may be displayed. If the user selects a plurality of sub menus 500 cumulatively, applications having authorization for corresponding rights may be displayed.

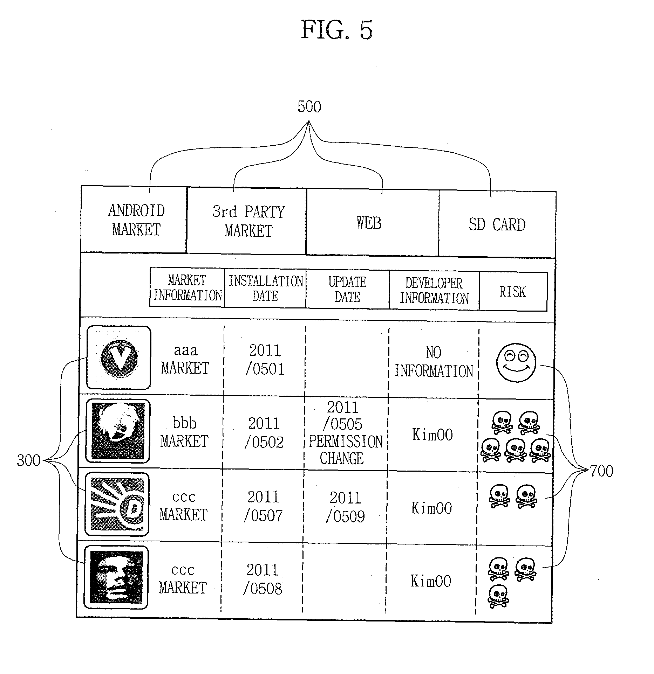

FIG. 5 is a diagram showing an example of a screen displayed by the processor if a download source UI tab of FIG. 3 is selected according to an exemplary embodiment of the present invention.

Referring to FIG. 5, if the user selects the download source UI tab 552, the processor 70 displays market information and risk of each application. The market information may include a market name, an installation date, an update date, and developer information. The market information indicates the download source of the application.

The market information may be periodically updated. If information about rights is changed after the application is installed, information indicating that the rights are changed may be displayed to the user. For example, the application downloaded from bbb market on May 02, 2011 performs update on May 05, 2011 as shown in FIG. 5. If at least one right for the application is changed during the update, a notification message such as 'permission change' may be displayed on update information column.

The download source UI tab 552 may include sub menu tabs 500 such as an android market, a third party market, a web, an SD card, etc. The sub menu tab 500 for the SD card displays applications downloaded from another terminal through a mail or message. If the user selects the sub menu 500, only an application having each download source may be displayed, and, if the user selects a plurality of sub menus 500 cumulatively, applications downloaded from corresponding download sources may be displayed.

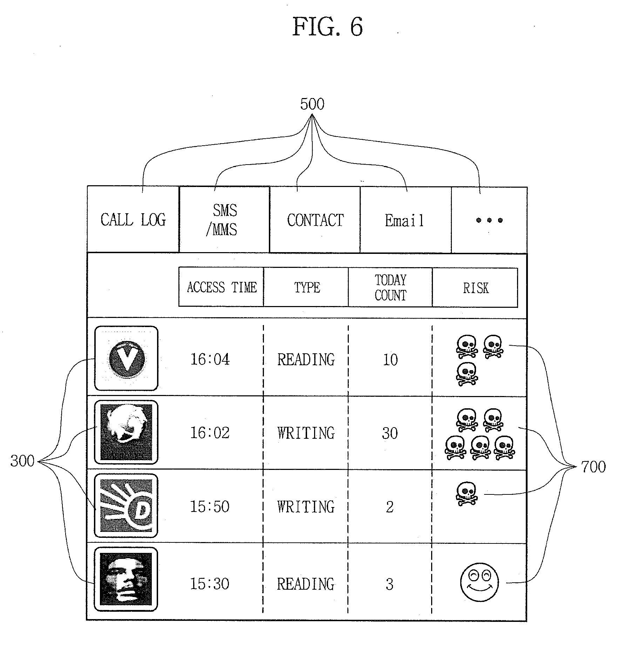

FIG. 6 is a diagram showing an example of a screen displayed by the processor if a DB use UI tab of FIG. 3 is selected according to an exemplary embodiment of the present invention.

Referring to FIG. 6, when the user selects the DB use UI tab 553, the processor 70 displays DB access information and risk of each application. The DB access information may include an access time, a type and access count in a determined period of time. The access count may be counted on a daily basis and today count may refer to total access count in a day.

The DB access information may be periodically updated. If the today count for a specific day is large, such as higher than average or higher than a threshold, an indicator for the item may be displayed to distinguish the item from other items. Since the excessive access to the DB may be caused by a malicious application rather than a normal operation of the application, the indicator may distinguish the item from other items to draw user attention. Further, if the today count is higher than a threshold value ("DB access limit"), the determination unit 50 may prohibit the application to access the DB. The threshold value may be calculated by adding an offset value to the average. The average may be obtained by calculating the average today count for a determined period of time (i.e., monthly basis).

The DB use UI tab 553 may include a call log, an SMS/MMS, a contact, an e-mail, etc. as a sub menu 500. If the user selects a specific sub menu tab, applications using corresponding DB may be displayed. For example, if the SMS/MMS tab is selected, application using SMS/MMS database may be displayed along with corresponding risk information. If the user selects a plurality of sub menus 500, applications using corresponding DBs may be displayed along with risk information.

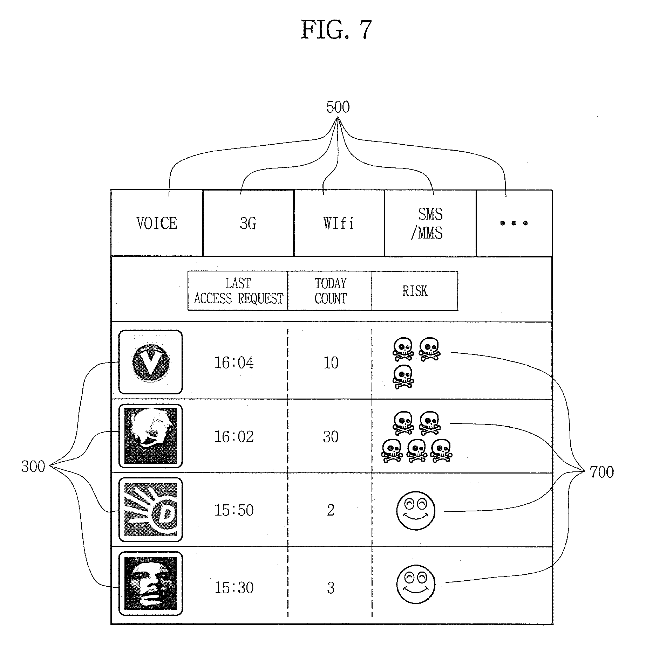

FIG. 7 is a diagram showing an example of a screen displayed by the processor if a network access count UI tab of FIG. 3 is selected according to an exemplary embodiment of the present invention.

Referring to FIG. 7, if the user selects the network access count UI 554 tab, the processor 70 displays network access information and risk of each application. The network access count information may include a last access request time and today count. Today count may refer to total network access count of an application in a specific day.

The network access information may be periodically updated. If the today count is excessively higher than average or a threshold, an indicator for the item may be displayed to distinguish the item from other items. Since the excessive access to the network may be caused by a malicious application rather than a normal operation of the application, the indicator may distinguish the item from other items to draw user attention. Further, if the today count is higher than a threshold value ("network access limit"), the determination unit 50 may prohibit the application to access the network. The threshold value may be calculated by adding an offset value to the average. The average may be obtained by calculating the average today count for a determined period of time (i.e., monthly basis).

The network access count UI tab 554 may include voice, 3G, WiFi, SMS/MMS, etc. as a sub menu 500. If the user selects a specific sub menu tab, applications which attempt to access corresponding network may be displayed. For example, if the 3G tab is selected, applications which have been attempted to access 3G may be displayed. If the user selects a plurality of sub menus 500, applications which have been attempted to access corresponding networks may be displayed.

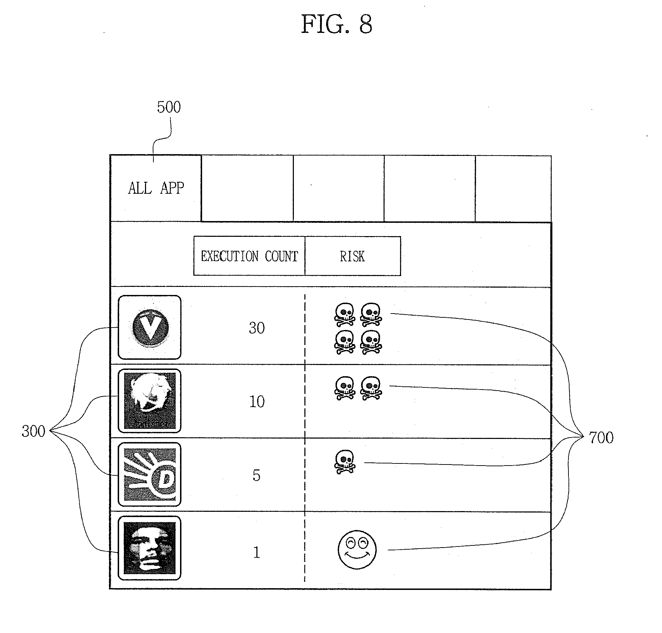

FIG. 8 is a diagram showing an example of a screen displayed by the processor if an execution count UI tab of FIG. 3 is selected according to an exemplary embodiment of the present invention.

Referring to FIG. 8, if the user selects the execution count UI 555 tab, the processor 70 displays execution information of each application and risk of each application. The execution information may include information about the execution count of the application. The execution count may be calculated on a daily basis ("today count"). If the execution count of the application is excessively higher than average, an indicator may distinguish the item from other items. Since the excessive execution of the application may be caused by a malicious application rather than normal operation of the application, the indicator may distinguish the item from other items to draw user attention. Further, if the execution count is higher than a threshold value ("application execution limit"), the determination unit 50 may prohibit the execution of the application. The threshold value may be calculated by adding an offset value to the average. The average may be obtained by calculating the average today count for a determined period of time (i.e., monthly basis). As the execution count is increased, risk may be increased.

The processor 70 may arrange the applications in descending order of risk and provide the risk result using an icon 700 for displaying the risk such that the user may recognize the risk visually. The icon 300 and 700 may be replaced by characters, numbers, graphs, and the like.

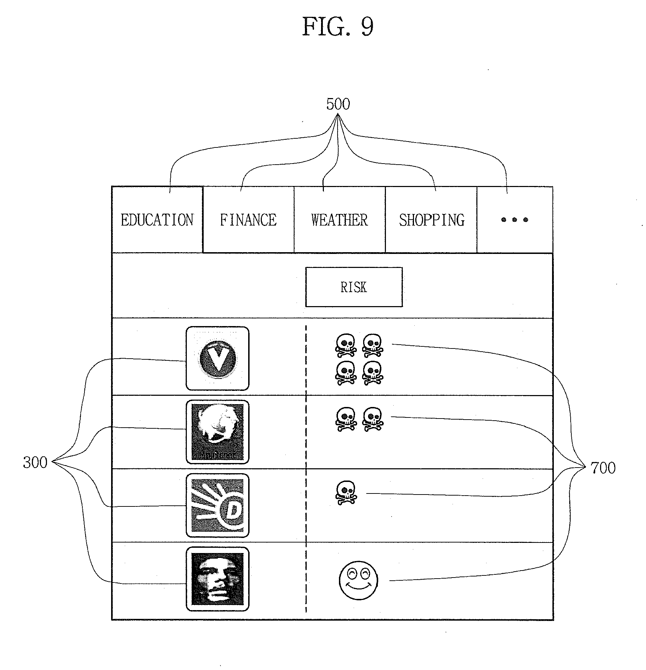

FIG. 9 is a diagram showing an example of a screen displayed by the processor if a category UI tab of FIG. 3 is selected according to an exemplary embodiment of the present invention.

Referring to FIG. 9, if the user selects the category UI 556 tab, the processor 70 displays the risk of the application on a per category basis.

The processor 70 may arrange the applications in descending order of risk and provide the risk using an icon 700 for displaying the risk such that the user may recognize the risk visually. If an application is selected, detailed information about the risk may be provided.

The category UI tab 556 may include education, finance, weather, shopping, etc. as the sub menu 500. If the user selects a specific sub menu tab, applications of corresponding category may be displayed. For example, if the education tab is selected, education-related applications may be displayed. If the user selects a plurality of sub menu 500, applications of corresponding categories may be displayed. Further, if a specific sub menu tab is selected, authorized rights for the category may be displayed and rights of each application that are not authorized rights for the corresponding category may be displayed.

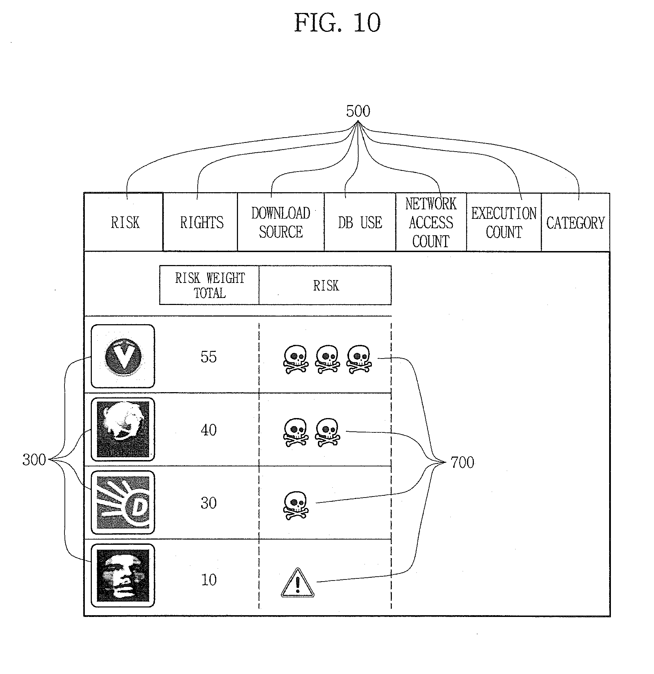

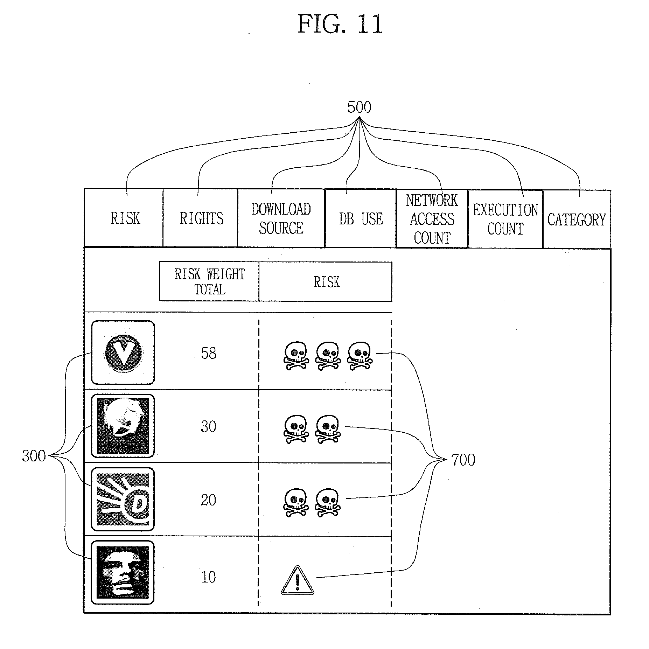

FIG. 10 is a diagram showing an example of a screen displayed by the processor if a risk UI tab of FIG. 3 is selected according to an exemplary embodiment of the present invention. FIG. 11 is a diagram showing an example of a screen displayed by the processor if two or more UI tabs of FIG. 3 are selected according to an exemplary embodiment of the present invention.

Referring to FIG. 10, if the user selects the risk UI tab 550, the processor 70 displays the total risk of each application. The total risk may be a value obtained by aggregating the risk results provided by each module. The total risk may be a risk value obtained using a weighted average of the risk results.

The processor 70 may arrange the applications in descending order of risk and provide the risk result using an icon 700 for displaying the risk such that the user may recognize the risk visually. The icon 300 and 700 may be replaced by characters, numbers, graphs, and the like.

Further, the user may select two or more UIs. In this instance, the processor 70 may aggregate risk results associated with the selected UIs and display the aggregated risk result of each application in association with the selected UIs.

Referring to FIG. 11, if the user selects the DB use UI tab 553 and the execution count UI tab 555, the processor 70 displays the aggregated risk of each application associated with the DB use UI 553 and the execution count UI 555. Further, the aggregated risk may be a value obtained by applying weights for DB use and execution count, respectively.

The processor 70 may arrange the applications in descending order of risk and provide the risk using an icon 700 for displaying the risk such that the user intuitively recognizes the risk. The icon 300 and 700 may be replaced by characters, numbers, graphs, and the like.

Since the terminal 1 provides the risk result of the application according to multiple determination criteria, the user recognizes risk types as well as the risk of an application. Thus, the user may prevent a malicious application from stealing personal information of the user and prevent an external application from being remotely installed.

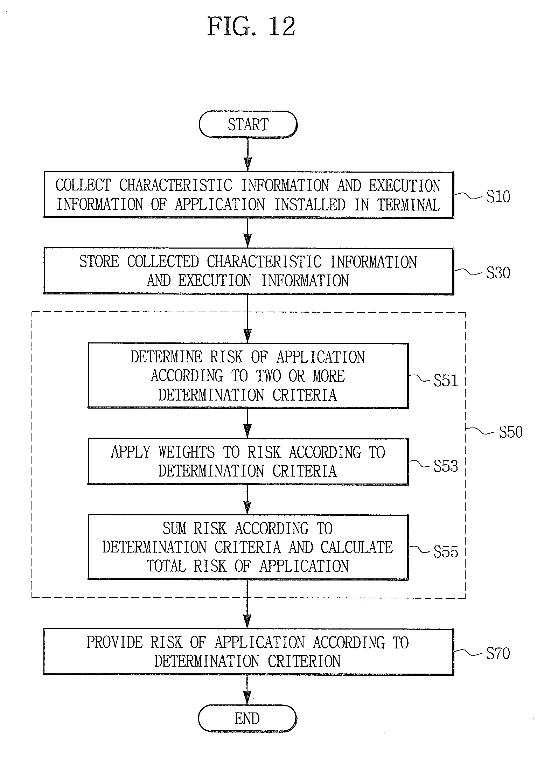

Hereinafter, a method for providing risk of an application using multiple risk criteria will be described in more detail. FIG. 12, FIG. 13, FIG. 14, FIG. 15, FIG. 16 and FIG. 17 will be described according to the process performed by the terminal 1 shown in FIG. 1A or FIG. 1B. However, FIG. 12, FIG. 13, FIG. 14, FIG. 15, FIG. 16 and FIG. 17 are not limited as such. FIG. 12 is a flowchart illustrating a method for providing the risk of an application using multiple risk criteria according to an exemplary embodiment of the present invention.

Referring to FIG. 12, characteristic information and execution information of the application installed in the terminal 1 are collected (S10). The characteristic information of the application is provided if the application is installed in the terminal 1 and the execution information of the application is provided if the application is executed in the terminal 1. Further, the characteristic information of the application may be collected before the installation if the terminal accesses the risk management server 110.

The collected characteristic information and execution information are stored (S30). The stored characteristic information and execution information may be updated if new information is available.

The characteristic information and execution information are compared with at least one risk determination criterion so as to determine the risk of the application (S50). For example, the rights of the application, a download source, usage of the database of the terminal, a network access count, an execution count, and a category, etc. may be used as risk determination criteria.

The determining of the risk of the application (S50) may include determining the risk of the application according to at least two determination criteria (S51) and aggregate the risk results according to the determination criteria to calculate the aggregated risk of the application (S55).

The calculating of the aggregated risk of the application (S55) may further include applying a weight to the risk results according to each determination criterion (S53). In this case, the weight may be determined according to the significance of each criterion. Weighted average of the risk results may be calculated as the aggregated risk. Further, all of the risk criterion may be applied so as to calculate the total risk of the application.

Hereinafter, exemplary embodiments for the determining of the risk of the application (S50) will be described in more detail.

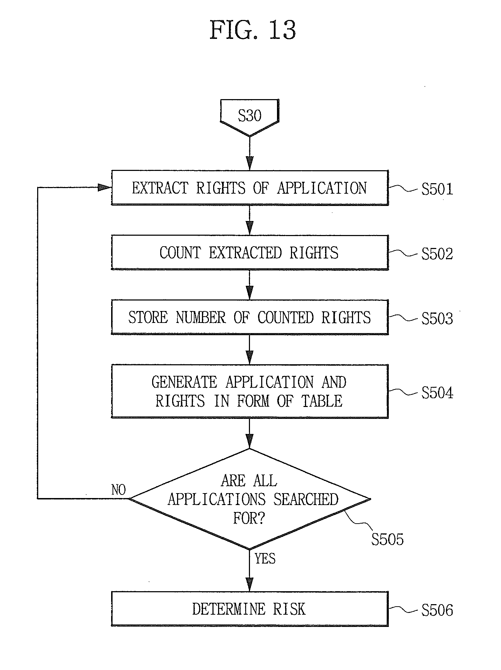

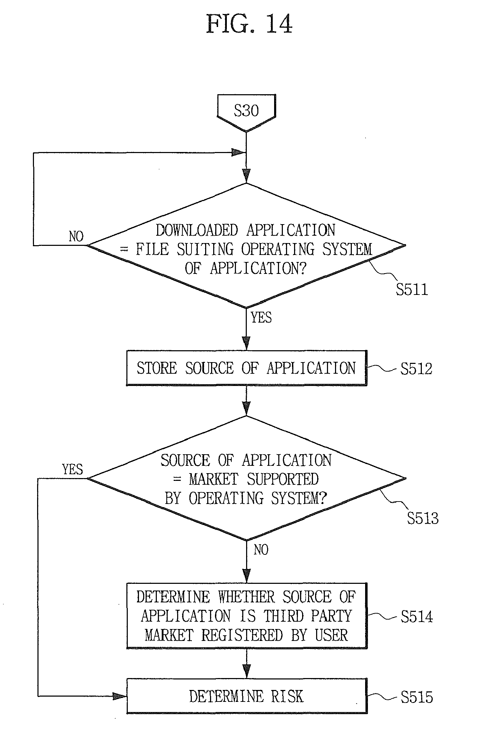

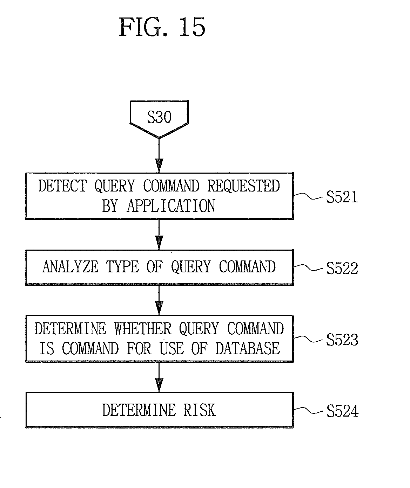

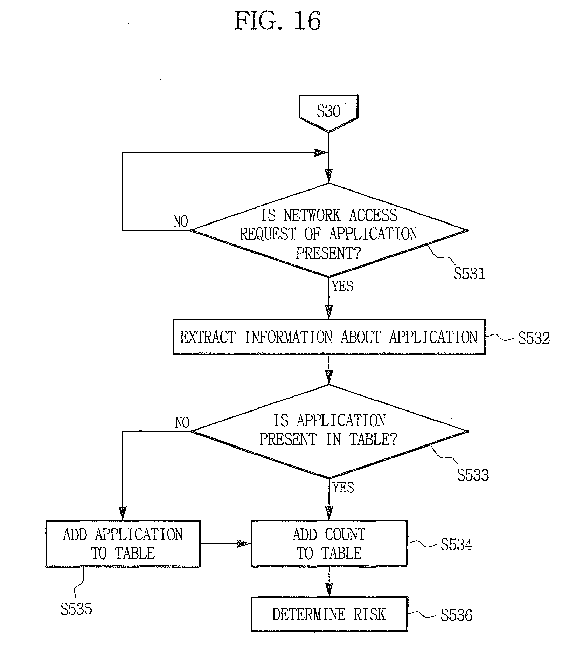

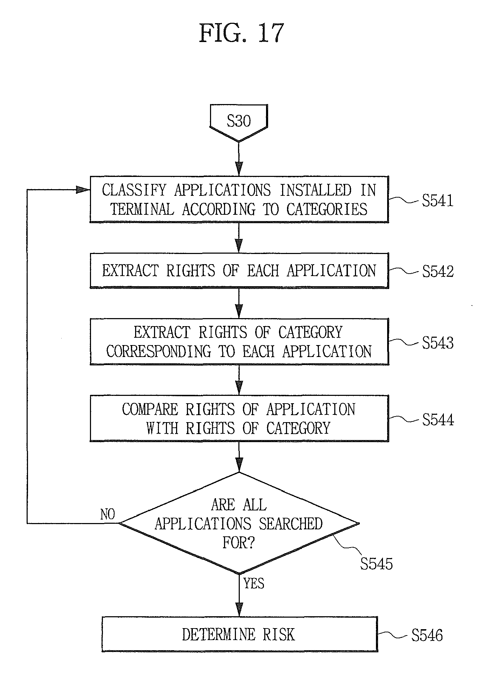

FIG. 13 is a flowchart illustrating a method for determining risk using rights of the application as a determination criterion according to an exemplary embodiment of the present invention. FIG. 14 is a flowchart illustrating a method for determining risk using the download source of the application as a determination criterion according to an exemplary embodiment of the present invention. FIG. 15 is a flowchart illustrating a method for determining risk using a usage of database by the application as a determination criterion according to an exemplary embodiment of the present invention. FIG. 16 is a flowchart illustrating a method for determining risk using the network access count of the application as a determination criterion according to an exemplary embodiment of the present invention. FIG. 17 is a flowchart illustrating a method for determining risk using category information of the application as a determination criterion according to an exemplary embodiment of the present invention.

Referring to FIG. 13, the determining of the risk of the application using the rights of the application as the determination criterion may include extracting rights of the application (S501), counting the extracted rights (S502), storing the number of counted rights (S503) and generating and storing a table including installed applications and rights corresponding to the applications (S504).

Further, it may be determined whether all applications are searched for (S505). If it is determined that all applications are searched for, the risk is determined using rights of the application as the determination criterion (S506). If it is determined that all applications are not searched for, the above process is repeated until all applications are searched for.

Referring to FIG. 14, the determining of the risk of the application using the download source of the application as the determination criterion may include steps as follows. The terminal 1 may determine whether the downloaded application is a file compatible with the operating system of the terminal 1 (S511). The terminal 1 identifies and stores the source of the application if it is determined that the downloaded application is a file compatible with the operating system of the terminal 1 (S512). Then, the terminal 1 may determine whether the source of the application is a market supported by the operating system (S513). Further, the terminal 1 may determine whether the source of the application is a third party market registered by the user if it is determined that the source of the application is not the market supported by the operating system (S514). The terminal 1 may determine the risk of the application using the market information (S515).

Referring to FIG. 15, the determining of the risk of the application using the usage of the database by the application as the determination criterion may include steps as follows. The terminal 1 may detect a query command requested by the application (S521), and analyze the type of the query command (S522). Then, the terminal 1 may determine whether the query command is a command for access the database (S523). The terminal 1 may determine the risk of the application using database access information based on the determination result of the query command (S524).

Referring to FIG. 16, the determining of the risk of the application using the network access count of the application as the determination criterion may include steps as follows. The terminal 1 may determine whether a network access request is generated by the application (S531), and extract information about the application and information about the network (S532). The terminal 1 may determine whether information about the application is registered in corresponding table ("network access table") (S533).

The information about the network may include network type information, such as 3G, WiFi, Voice, SMS/MMS etc. The table stores information of the application and the count information of the network access request of the application. The table may store count information of access requests for each network.

If the information about the application is stored in the table, the count of the network access requests is increased by one (S534). If the application is not stored in the table, the information about the application is stored and the count of the network access requests is added to the table (S535). Thereafter, the risk of the application is determined based on information in the table (S536).

Similarly, although not shown in figures, the determining of the risk of the application using the execution count of the application as the determination criterion may include steps of extracting information about the application, retrieving information from a table ("application execution table"), adding count number if the application is stored in the table or storing information about the application and count number if the application is not stored in the table, and determining the risk of the application using the table.

The table stores the application and count of the execution requests of the application. If the application is not stored in the table, the application and count number are stored in the table. Thereafter, the risk of the application is determined based on the information stored in the table.

Referring to FIG. 17, the determining of the risk of the application using the category information of the application as the determination criterion may include steps as follows. The terminal 1 may classify categories for the applications installed in the terminal 1 and determine a category for the application installed in the terminal 1 according to classified categories (S541). Then, the terminal 1 may extract rights of each application (S542), and extract rights of corresponding category for the application (S543). Then, the terminal 1 may compare the rights of the application with the rights of the corresponding category and determine which rights of the application match the rights of the corresponding category (S544).

Further, it may be determined whether all applications are searched for (S545). If it is determined that all applications are searched for, the risk is determined based on the category information (S546). If it is determined that all applications are not searched for, the above process is repeated until all applications are searched for.

Referring back to FIG. 12, risk result of the application is displayed according to the determination criterion (S70). A screen for selecting the determination criterion and a screen for selecting a sub menu of each determination criterion may be provided. The risk result of the application may be displayed in the form of an UI such as an icon such that the user may recognize the risk result visually.

Since the risk of the application is provided according to the determination criterion with respect to each security item, the user may recognize the type of the risk and respond to the risk differently based on the type of the risk, for example, responding to a malignant application that may be stealing personal information of the user and preventing an external application from being remotely installed.

Aspects of the present invention may be implemented in a form of program instructions capable of being performed through various computer components to be recordable in a non-transitory computer-readable storage medium. The computer-readable storage medium may include program instructions, data files, data structures, or the like, alone or in combinations thereof. The program instructions recorded in the computer-readable storage medium may be designed and configured especially for implementing the present invention, or the type of the program instructions may be known to those skilled in a field of computer software. The computer-readable storage medium may include a magnetic medium, such as a hard disk, a floppy disk, and a magnetic tape; an optical recording medium, such as a CD-ROM, a DVD; a magneto-optical medium, such as a floptical disk; and a hardware device specially configured to store and perform program instructions, such as a ROM, a RAM, a flash memory, or the like. The type of the program instructions may be machine language codes that may be compiled by compilers as well as higher-level language codes capable of being executed by computers using interpreters or the like. The hardware device may be configured to be operated as one or more software modules in order to perform the process according to the present invention, and vice versa.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
A terminal includes an information collection unit to collect execution information of an application; a determination unit to select a first risk determination criterion in association with a first security item, and to determine first risk of the application with respect to the first security item based on the first risk determination criterion and the execution information; and a display unit to display the first risk of the application and the first security item.

## Claims

1. A terminal, comprising:
an information collection unit adapted to collect execution information of an application;
a determination unit adapted to select a first risk determination criterion in association with a first security item, and to determine a first risk of the application with respect to the first security item based on the first risk determination criterion and the execution information; and
a display unit adapted to display the first risk of the application and the first security item.

2. The terminal according to claim 1, wherein
the execution information comprises characteristic information of the application, the determination unit being adapted to select the first security item according to the characteristic information and to select the first risk determination criterion based on the first security item,
wherein, preferably, the characteristic information comprises category information of the application, the determination unit being adapted to determine the first risk of the application based on whether the application has a right corresponding to the security item, and/or the characteristic information comprises download source information of the application, the determination unit is adapted to determine the first risk of the application based on the download source information of the application.

3. The terminal according to claim 2, wherein the determination unit is adapted to determine the first risk of the application based on a number of rights of the application, and wherein the rights of the application correspond to one of multiple security items.

4. The terminal according to any of claims 1 to 3, wherein the determination unit is adapted to determine the first risk of the application based on at least one of rights of the application, a download source of the application, a database usage of the application, network access information, an execution number of the application, and category information of the application.

5. The terminal according to any of claims 1 to 4, wherein the determination unit is adapted to select a second risk determination criterion in associated with a second security item and to determine a second risk of the application with respect to the second security item based on the second risk determination criterion and the execution information, and
the display unit is adapted to display the second risk of the application and the second security item.

6. The terminal according to claim 5, further comprising a calculation unit adapted to obtain an aggregated risk of the application with respect to the first security item and the second security item based on the first risk determination criterion and the second risk determination criterion,
wherein, preferably, the display unit is adapted to display a screen to select one or more risk determination criteria, to display the first risk of the application in response to a selection of the first determination criterion, to display the second risk of the application in response to a selection of the second risk determination criterion, and to display the aggregated risk of the application in response to a selection of multiple risk determination criteria,
and/or wherein, preferably, the terminal further comprises a calculation unit adapted to calculate the aggregated risk by applying weighted average of the first risk and the second risk.

7. A method for providing risk of an application, comprising:
collecting execution information of the application;
selecting a risk determination criterion in association with a security item;
determining a risk of the application with respect to the security item based on the risk determination criterion and the execution information; and
displaying the risk of the application and the security item.

8. The method according to claim 7, wherein the risk of the application is determined based on at least one of rights of the application, a download source of the application, a database usage of the application, network access information, an execution number of the application, and category information of the application.

9. The method according to claim 8, wherein determining the risk of the application comprises:
extracting rights of the application;
counting a number of the extracted rights of the application;
storing the number of counted rights; and
determining the risk of the application based on the number of the extracted rights of the application.

10. The method according to claim 8 or 9, wherein determining the risk of the application comprises:
determining whether the download source of the application is supported by the operating system on which the application is executed;
determining whether the download source of the application is registered if the download source of the application is not supported by the operating system; and
determining the risk of the application using download source information.

11. The method according to any of claims 8 to 10, wherein determining the risk of the application comprises:
detecting a query command requested by the application;
determining whether the query command is a command to use database;
analyzing a type of the query command; and
determining the risk of the application based on the type of query command if it is determined that the query command is a command to use the database.

12. The method according to any of claims 8 to 11, wherein determining the risk of the application comprises:
determining a number of network access trials of the application; and
determining the risk of the application based on the number of network access trials of the application.

13. The method according to any of claims 8 to 12, wherein determining the risk of the application comprises:
determining a number of executions of the application during a determined time; and
determining the risk of the application based on the number of executions of the application.

14. The method according to any of claims 8 to 13, wherein determining the risk of the application comprises:
identifying category information of the application;
determining a security item for the application based on the category information; and
determining the risk of the application based on whether the application has a right corresponding to the security item.

15. The method according to any of claims 8 to 14, wherein determining the risk of the application comprises:
determining multiple risks of the application based on each of multiple determination criteria; and
obtaining an aggregated risk of the application by aggregating the multiple risks of the application,
wherein, preferably, determining the risk of the application further comprises applying weights to the multiple risks of the application.

16. The method according to any of claims 7 to 15, wherein displaying the risk of the application comprises:
providing a selection screen displaying the determination criterion; and
providing a selection screen displaying a sub menu of the determination criterion.

17. The method according to any of claims 8 to 16, wherein the risk of the application is displayed as an icon.

18. A non-transitory computer-readable storage medium comprising an executable program, which when executed, operates the method of any of claims 7 to 17.
